# FASCICULE DE BREVET EUROPEEN

(11) **EP 1 053 865 B1**
(45) Date de publication et mention de la délivrance du brevet: **11.12.2002**
(21) Numéro de dépôt: 00401332.2
(22) Date de dépôt: 16.05.2000
(51) Int. Cl.: B32B 7/06, B32B 7/10, B65D 77/20

(54) **Structure multicouche susceptible d'etre obtenue par refermeture de la bulle de coextrusion**
Mehrschichtige Struktur, die durch Wiederverschliessung der Extrusionsblase erhalten wird
Multilayer structure which can be obtained by reclosing of the coextrusion bubble

(30) Priorité: 21.05.1999 FR 9906504
(43) Date de publication de la demande: 22.11.2000
(73) Titulaire: SOPLARIL SA, 92500 Rueil Malmaison (FR)
(72) Inventeur: Engelaere, Jean-Claude, 59210 Koudekerke-Branche (FR)
(74) Mandataire: Cabinet Hirsch

(56) Documents cités:
- EP-A- 0 516 276
- WO-A-90/07427
- WO-A-96/40504
- FR-A- 2 741 605

## Description

L'invention a pour objet une structure multicouche, pour emballage refermable, qui offre une ouverture et une refermeture faciles et efficaces.

Ce type d'emballage, avec un opercule souple refermable sur le contenant, est connu, notamment dans le domaine de l'alimentaire, tant pour les emballages dits "sous gaz" avec une barquette rigide (thermoformée ou préformée par exemple par injection) que pour les emballages dits "sous-vide" avec une barquette souple thermoformée.

Ainsi, la demande GB-A-2 319 746 (au nom de Dolphin) décrit des films thermosoudables pour emballages refermables. Cet emballage comprend une barquette (A) comprenant une couche support (par exemple en PVC ou PET), une couche en PE et un film mince en résine ionomère ou en copolymère éthylène/acrylate de méthyle et un opercule souple (B) comprenant une couche en ionomère ou copolymère identique à la couche précédente, avec laquelle elle coopère, et une couche d'adhésif élastomère, une couche de PE et une couche support (PVC, PET). Dans cette structure, la soudure s'effectue par les couches de résine ionomère ou copolymère éthylène/acrylate de méthyle, les films (A) et (B) étant placés entre des barrettes, la barrette supérieure seule étant chauffante.

Cette structure n'est fonctionnelle que parce que la résine ionomère ou copolymère a un point de fusion faible (et notamment inférieur à celui de la couche d'adhésif).

Une structure similaire est décrite dans le brevet WO-A-90 07427 (au nom de James River), par ailleurs cité dans la demande au nom de Dolphin évoquée ci-dessus. La structure décrite dans cette demande de brevet au nom de James River est adaptée pour la sacherie. Cette structure comprend une couche support, une couche en un adhésif élastomère, et une "peau", cette "peau" étant thermosoudable. Cette "peau" est de préférence une résine ionomère ou un copolymère du même type que ceux décrits dans le brevet précédent au nom de Dolphin. Cette structure est soudée sur elle-même lors de la fabrication de sachets. Lors de l'ouverture, la délamination peut se faire à l'interface adhésif/peau ou adhésif/couche support ou au sein de l'adhésif lui-même. Dans ce dernier cas de délamination, les barrettes entre lesquelles la structure est soudée sont toutes deux chauffantes.

US-A-3454210 décrit un emballage comprenant une barquette et un opercule, cet opercule comprenant par exemple une couche de PET, une couche de PE traité Corona, une couche d'adhésif et une couche de PE soudant. Il est de plus indiquer, mais sans exemple et sans description complète, que le film refermable peut aussi être présent au niveau de la barquette.

Ces emballages ci-dessus présentent divers inconvénients. Tout d'abord, ils n'ont pas vocation à être utilisés dans tous les types d'emballage, tant "sous-gaz" que "sous-vide", tant rigides que souples, notamment sacherie, et dans tous types de machine, tant horizontale que verticale. On recherche donc une structure "universelle" pouvant être adaptée sur les machines actuelles, et trouvant une application générale. Ensuite, ces emballages font appel, en tant que couche thermosoudable, à des résines ionomères, dont le coût est très élevé, ce qui rend l'emballage final d'un coût lui aussi élevé.

Aucun des documents ci-dessus n'enseigne ni ne suggère l'invention.

Ainsi, l'invention fournit un procédé de préparation d'une structure multicouche (C, C') symétrique, comprenant une couche centrale d'adhésif par pression (3, 3') et deux couches externes (2, 2'), (4, 4'), dont l'une est soudante déchirable (4, 4'), ladite couche centrale d'adhésif comprenant deux sous-couches (3a, 3b), (3'a, 3'b);
par refermeture de la bulle de coextrusion sur elle-même.

Selon un mode de réalisation, la refermeture de la bulle de coextrusion se fait en milieu oxydant.

Selon un mode de réalisation, la couche centrale d'adhésif par pression (3, 3') comprend un adhésif hot melt à base d'élastomère thermoplastique.

Selon un mode de réalisation, les couches externes (2, 2'), (4, 4') sont en PE.

Selon un mode de réalisation, les couches externes comprennent du PE métallocène.

Selon un mode de réalisation, la refermeture se fait en milieu oxydant.

L'invention a aussi pour objet un emballage comprenant au moins un film déchirable (A, A'), ce film déchirable comprenant une structure selon l'invention.

L'invention a aussi pour objet un procédé de préparation d'un emballage selon l'invention.

L'invention est maintenant décrite plus en détail dans la description qui suit, en référence aux dessins dans lesquels :
- la figure 1 est l'emballage selon un mode de réalisation de l'invention avant ouverture ;
- la figure 2 est l'emballage selon un mode de réalisation de l'invention après ouverture ;
- la figure 3 représente la bulle d'extrusion selon un mode de réalisation avant et après refermeture.

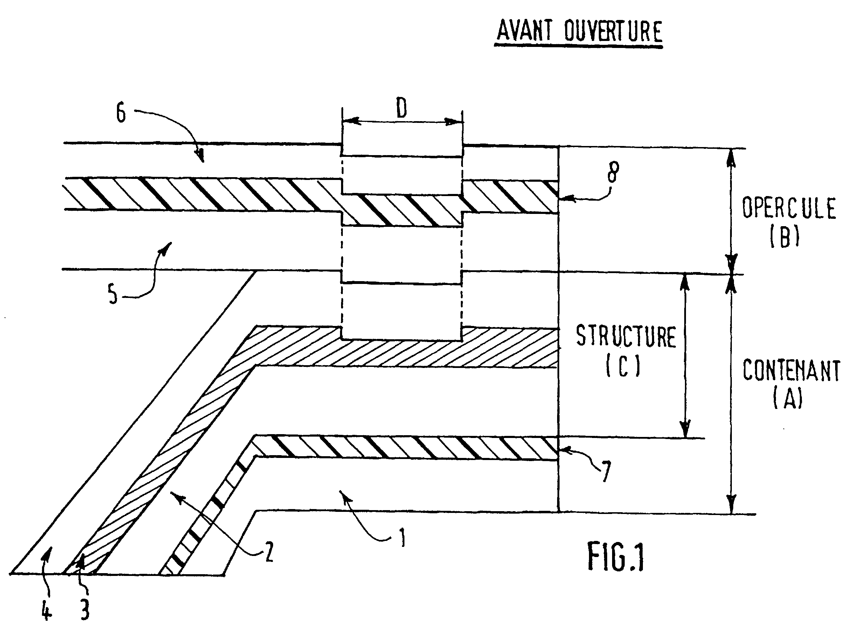

La figure 1 décrit l'emballage selon un mode de réalisation de l'invention, après soudure. Cet emballage comprend un contenant (A) et un opercule (B). Le contenant (A) comprend une couche support (1), une couche complexable (2), une couche d'adhésif par pression (3) et une couche soudante déchirable (4). Le contenant peut aussi comprendre, entre la couche support (1) et la couche complexable (2) une couche liante (7), si nécessaire. Une sous-partie de ce contenant (A) est la structure (C) , qui comprend les couches (2), (3) et (4). L'opercule (B) comprend une couche support (6) et une couche soudante (5). Les couches soudante déchirable (4) et soudante (5) sont en regard l'une de l'autre. L'opercule (B) peut aussi comprendre une couche liante (8) entre les couches (5) et (6), si nécessaire. L'opercule (B) est soudé sur le contenant (A) par exemple avec matriçage, à l'aide de barrettes dont de préférence l'une seulement est chauffante et est disposée côté opercule. Dans la zone de soudure, à savoir le cordon (D), il se produit une déformation des contenant et opercule. Cette déformation se caractérise par une réduction et/ou modification des épaisseurs, dues au ramollissement et/ou à la fusion de certaines couches qui entraîne le fluage de leurs composants sur les bords du cordon de soudure. La zone de soudure (cordon (D)) délimite la zone de fragilisation. La couche support (6) de l'opercule (B) est en général peu affectée par la soudure, car les composants de cette couche support ont des points de fusion généralement nettement plus élevés que ceux des composants de la couche soudante (5). Il en est en général de même pour la couche liante (8) de l'opercule. Les remarques ci-dessus s'appliquent de la même façon à la couche support (1) et à la couche liante (7) du contenant (A), qui de plus sont plus loin de la source de chaleur, pour le cas, préféré, de l'utilisation d'une seule barrette chauffante du côté de l'opercule.

Les conditions de la soudure (temps, température, pression) sont classiquement ajustées pour que la déformation se situe au niveau des couches soudante déchirable (4) et soudante (5). La couche adhésive (3) étant en général malléable du fait de sa nature, et représentant en général une épaisseur relativement importante de la structure (C), il n'y aura en général pas de fusion ou fluage dans la totalité de l'épaisseur. La couche d'adhésif supportant sensiblement la totalité de la déformation, la couche complexable (2) ne sera donc, en général, pas déformée et donc pas fragilisée. La fragilisation, au niveau du cordon de soudure, est donc principalement générée dans la couche soudante déchirable (4) et éventuellement partiellement dans la couche d'adhésif (3). La couche soudante (5) n'est pas fragile et sa résistance à la déchirure est supérieure à celle de la couche (4), ainsi qu'à la force de cohésion de la couche adhésive (3). Lors de l'ouverture de l'emballage, les contraintes se propagent et entraînent la rupture des couches les plus fragiles, à savoir la couche soudante déchirable (4) et une partie de l'épaisseur de la couche adhésive.

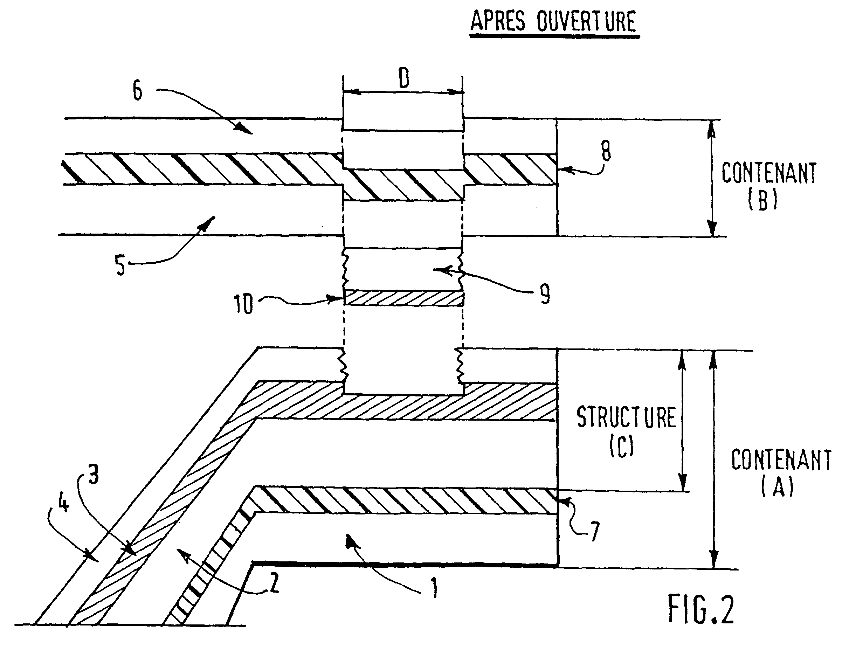

La figure 2 représente l'emballage selon l'invention après ouverture. La déchirure se fait de part et d'autre du cordon de soudure (D) (la zone matricée), ce qui a pour effet de dégager une bande composée de la couche soudante déchirable déchirée (9) et d'une partie (10) de la couche adhésive (3), qui restent soudées sur la couche soudante de l'opercule (B). Une partie de la couche adhésive (3) assurant la refermeture, se trouve sur chacune des faces internes des contenant (A) et opercule (B) de l'emballage. Il suffit de repositionner face à face les deux zones correspondant à la déchirure et d'exercer une pression pour assurer la refermeture de l'emballage. La force de refermeture (recollage de l'adhésif sur lui-même) est proportionnelle à la pression exercée pour la refermeture. En général, la déchirure dans la couche adhésive entraîne un léger blanchiment de celle-ci du fait de l'irrégularité des surfaces de rupture entraînant une irisation. La refermeture est alors maximale lorsque la pression exercée rend la zone de déchirure à nouveau transparente. En effet, dans ce cas, la continuité de la couche adhésive a été reconstituée, et cette couche adhésive ne présente plus alors d'irisation de surface. La réouverture et la refermeture sont identiques aux opérations décrites ci-dessus.

Un avantage de l'invention par rapport à l'art antérieur dans le cas d'une structure (thermo)formée avec opercule réside dans le fait que l'adhésif se trouve au niveau du contenant. Ainsi, en utilisant une seule barrette chauffante pour la soudure, et en soudant côté opercule (ce qui est en général le cas car l'opercule est en général plus fin que la barquette), l'invention permet de limiter la déformation de l'adhésif, car celui-ci est plus éloigné de la source de chaleur que dans l'art antérieur.

On préfère que la rupture soit une rupture cohésive (rupture dans l'épaisseur de la couche par décohésion) dans la couche adhésive (3). Cette rupture cohésive est obtenue par la technique de refermeture de bulle.

On remarquera à ce stade que le type d'emballage du mode de réalisation ci-dessus pourrait être décrit, de façon simplifiée, comme un emballage traditionnel dans lequel le film soudant est remplacé par la structure multicouche (C). On a alors un emballage où l'adhésif n'est plus dans l'opercule mais dans le contenant, l'inverse de l'art antérieur des emballages refermables où la couche adhésive se trouve dans l'opercule.

Dans le cas de la sacherie, le film multicouche formant le contenant (A) est soudé sur lui-même. L'emballage comprend alors deux contenants (A) et (A'), qui présentent la même configuration. Le mécanisme de fonctionnement est le même que précédemment. Dans ce cas également, on utilisera de préférence un système de barrettes de soudure qui ne chauffent que d'un côté. La partie située du côté de la barrette chauffante subit l'effet de matriçage tandis que celle du côté non chauffant ne le subit pas. De cette façon, à l'ouverture, seule la couche soudante déchirable ayant été située du côté de la barrette chauffante se déchire et l'ouverture est de ce fait plus nette. Ainsi, la situation est alors identique à celle décrite précédemment. Le contenant (A') peut aussi comprendre une couche liante (7'), de la même manière que le contenant (A). En général, dans le cas de la sacherie, les éléments (A) et (A') sont formés de la même structure.

Il est clair que la couche complexable n'est pas nécessaire et peut être omise, par exemple dans le cas où la feuille dont est issu le contenant (A) est fabriquée par extrusion. Dans ce cas, on aura directement l'adhésif (3) sur le support (1). Dans le cas de la coextrusion, on peut produire par exemple un multicouche du type PET ou PS ou PP/adhésif type Hot Melt/PE déchirable sur une ligne adaptée (telle qu'une ligne de coextrusion cast (à plat) pouvant produire des feuilles semi-rigides thermoformables de l'ordre de 500 µm). Dans le cas du calandrage, la couche complexable est en général présente et on peut dans un premier temps coextruder un film tricouche PE complexable/adhésif type Hot Melt/PE déchirable, et appliquer celui-ci un peu plus loin sur un film support par exemple un film PVC (la couche de PE complexable n'étant dans ce cas pas traité Corona). Le film support sortant de la calandre est encore chaud (tout comme en général le film tricouche extrudé) lorsque le film tricouche est appliqué. On évite ainsi au maximum les déformation des feuilles support telles que les feuilles PVC. L'adhésion du film bicouche est améliorée lorsque l'application de celui-ci se fait à l'aide d'une calandre. Le produit multicouche final peut ensuite être thermoformé ou subir un autre traitement, si nécessaire. Par contre, cette couche complexable sera en général présente lorsque la feuille dont est issu le contenant (A) est fabriquée par contre-collage ou lamination.

Les différentes couches sont décrites plus en détail maintenant.

Le contenant (A) comprend, de façon schématique, une couche support (1), sur laquelle est déposée la structure (C), ladite structure (C) comprenant les couches (2), (3) et (4).

Cette structure (C) présente une épaisseur en général comprise entre 20 et 200 µm, de préférence 30 à 100 µm. La couche adhésive (3) représente de préférence plus de 30 %, avantageusement plus de 40 %, de l'épaisseur de la structure (C) ; les couches (2) et (4) représentent chacune en général de 10 à 50 %, de préférence de 10 à 30 %.

La couche complexable (2) se situe sur la face interne et est destinée à être liée à la couche support (1), éventuellement par l'intermédiaire d'une couche liante (7) Cette couche complexable recevra avantageusement un traitement corona (notamment dans le cas du contre-collage ou lamination), de préférence tel que la tension de surface soit supérieure à 38 dynes. Cette couche est classiquement en polyoléfine. Ce traitement corona facilite l'accrochage de la couche complexable (2) à la couche support (1), de préférence par l'intermédiaire d'une couche liante (7) ; notamment cette couche est une colle. La couche complexable (2) permet ainsi :
(i) d'équilibrer la structure lors de la coextrusion pour éviter le "roulage" du film sur lui-même, le roulage nuisant à la machinabilité lors du complexage ;
(ii) de protéger la couche d'adhésif qui se trouve ainsi en sandwich ;
(iii) de donner une "main" (c'est-à-dire de la rigidité) à la structure, (les polyoléfines étant assez rigides), ce qui améliore la tenue et machinabilité ; et
(iv) de faciliter l'extrusion de la couche d'adhésif car la couche (2) joue le rôle de support et évite le collage sur les différents éléments de la ligne de coextrusion.

Cette couche complexable peut être transparente ou opaque. Son épaisseur peut varier de 10 à 100 µm, de préférence de 10 à 30 µm.

Cette couche complexable est en polyoléfine. Ce terme a l'acceptation couramment utilisée dans l'art. A titre d'exemple, on citera les homopolymères et copolymères d'oléfines, avec d'autres oléfines ou d'autres types de monomère (tel que l'acétate de vinyle, les (méth)acrylates d'alkyle). Des exemples spécifiques sont : PE (tel que: HDPE, MDPE, LMDPE, LDPE, LLDPE, VLDPE, PE métallocène), PP, copolymères de PE avec une alpha-oléfine, copolymères EVA, etc.

La composition de cette couche peut aussi être adaptée pour améliorer l'adhésion à la couche adhésive (3). Ainsi, cette couche peut comprendre de 20 à 90 %, de préférence de 50 à 70 %, de PE métallocène ou de liant de coextrusion (tels que ceux à base de PE modifié).

Divers additifs peuvent être présents, par exemple anti-oxydants, anti-block, glissants, etc., notamment pour faciliter l'extrusion et la machinabilité du film.

La couche soudante déchirable (4) se situe sur la face externe de la structure (C). Elle a pour fonction d'assurer la fermeture de l'emballage par une soudure thermique. Celle-ci se fait sur elle-même (sacherie) ou sur la couche soudante de l'opercule (par exemple soudure entre l'opercule et la barquette rigide). Cette couche (4) est déchirable, de préférence dans les deux sens (sens machine MD et sens transverse TD). Cette déchirabilité est obtenue par exemple par le choix des résines utilisées dans le mélange et/ou par l'ajout de charges minérales qui augmentent sa fragilité et/ou par ajustement de l'épaisseur. La température de fusion de cette couche (4) est en général supérieure à celle de la couche d'adhésif (5).

Cette couche soudante déchirable peut être transparente ou opaque. Son épaisseur peut varier de 10 à 100 µm, de préférence de 10 à 30 µm.

Cette couche est en général en polyoléfine, la polyoléfine peut notamment être la même que celle utilisée pour la couche complexable.

Cette couche soudante déchirable, étant externe, présentera avantageusement une bonne machinabilité, obtenue par exemple par ajout d'agents glissants et anti-block qui facilitent la glisse sur les éléments de la machine de conditionnement. Cette glisse sera en particulier appréciée lors de l'utilisation sur machines verticales. (Ks ≤ 0,25), où Ks est le coefficient de glisse statique). Cette couche soudante présentera avantageusement des propriétés collantes à chaud (ou propriétés de résistance à chaud) même lorsque la soudure est encore chaude: la soudure ne se re-sépare pas lorsque le produit à conditionner tombe dans le sac (dans le cas de machine verticale) et/ou lorsqu'on injecte du gaz sur machine de thermoformage (c'est-à-dire que ladite couche soudante présentera avantageusement des propriétés de "hot tack"). Pour cette dernière propriété, on ajoutera avantageusement du PE métallocène à ladite couche soudante. La formulation de cette couche soudante déchirable sera aussi de préférence ajustée afin que le toucher soit peu poisseux, afin d'éviter tout collage intempestif ou toute contamination par le produit emballé. Les charges pouvant être ajoutées afin de favoriser la déchirabilité sont des charges minérales, telles que du talc et du carbonate de calcium, présentes en des quantités comprises par exemple entre 5 et 30 %, de préférence entre 5 et 15 %.

D'autres additifs peuvent être ajoutés, comme des additifs anti-buée, des tensioactifs peuvent aussi être déposés sur sa face externe.

Cette couche soudante déchirable se déchire sensiblement uniquement dans la zone de soudure, à savoir le cordon (D). En effet, la couche est fragilisée dans cette zone. Le matriçage de la zone de soudure réduit sa résistance mécanique qui devient inférieure à celle des zones non soudées. La force de déchirure peut varier ; elle sera cependant ajustée pour se situer avantageusement entre 700 et 1000 g/15 mm, ce qui correspond aux valeurs d'un film pelable actuel.

Une zone ou cordon de soudure large est avantageuse, afin de faciliter la refermeture de l'emballage et garantir une force de recollage suffisante. La largeur du cordon sera par exemple de 4 à 12 mm, de préférence entre 5 et 8 mm.

La couche adhésive (3) assure la refermeture de l'emballage après ouverture.

Cette couche est en sandwich entre la couche complexable (2) et la couche soudante déchirable (4). L'adhésion de la couche d'adhésif sur ces couches est de préférence supérieure à la valeur correspondant à la force de déchirure à appliquer sur le cordon de soudure pour l'ouverture de l'emballage. Cette adhésion sera donc de préférence supérieure à 1000 g/15 mm. Pour obtenir cette adhésion, les couches complexable et soudante déchirable comprennent par exemple un PE métallocène ou une résine liante. La déchirure aura lieu de préférence dans la couche adhésive ; la rupture est cohésive. Ainsi, une partie de l'adhésif par pression se trouve sur chaque face de l'emballage. La force de refermeture est ainsi rendue maximale car il y a adhésion de l'adhésif sur lui-même. De plus, si la couche soudante déchirable comprend par exemple du PE métallocène ou un liant, alors il y aura aussi une bonne adhésion de l'adhésif sur cette couche, ce qui facilite le repositionnement des faces de l'emballage.

La couche d'adhésif comprend un adhésif par pression (ou un auto-adhésif). Celui-ci peut être un hot-melt, notamment à base d'un élastomère ou d'autres polymères qui ne sont pas élastomériques, tels les EVA. Cet adhésif peut aussi ne pas être du type hot-melt, mais être dilué en milieu solvant ou en phase aqueuse.

De façon très générale, et non limitative, les adhésifs hot-melt comprennent:
a) Polymères tels que EVA, PE, PP, EEA (éthylène éthylacrylate) et les élastomères thermoplastiques ou caoutchoucs (copolymères styréniques (blocs) du type Styrène-butadiène, styrène-isoprène, styrène-éthylène/butadiène, ou des polymères à base de butadiène tels que NBR ou encore des copolymères ethylène-propylène tels que EPR). Ils entrent de 5 à 50% dans la formulation et ont pour fonction d'assurer: l'adhérence (polarité), les propriétés barrières, la brillance, la résistance mécanique, la flexibilité et la régulation de la viscosité.
b) Résines (tackifiantes) qui peuvent être naturelles (Esters de colophane, Terpéniques ou Terpène-phénoliques), pétrolières, aliphatiques ou aromatiques. Elles entrent de 0 à 45% dans la formulation. Elles augmentent le tack à chaud, l'adhérence et régulent la cohésion.
c) Paraffines et cires qui peuvent entrer dans la formulation à un niveau de 20 à 80%. Elles ont un rôle au niveau des propriétés barrières, de la brillance, de la rigidité, du coût, du point goutte et de la dureté du Hot Melt.
d) Plastifiants qui peuvent entrer dans la formulation à un niveau compris entre 0 et 10%. Ils augmentent le tack à froid et régulent la souplesse et la viscosité du Hot Melt.
e) Anti-oxydants qui entrent de 0,2 à 10% dans la formulation. Ils stabilisent les composants à chaud et à froid.
f) Charges qui entrent dans la formulation lorsque l'on souhaite des propriétés particulières telles que la résistances aux UV (oxydation), l'ignifigation, l'anti-allergie, la rhéologie, la déchirure dans l'épaisseur, etc..

On utilise de préférence un Hot Melt auto-adhésif, constitué d'un mélange d'élastomère et de résine tackifiante. L'auto-adhésif est constitué d'un mélange de :
40 à 80% d'élastomère thermoplastique
20 à 60% de résine tackifiante
< 30% d'autres constituants : huile plastifiante, anti-oxydant, additifs, etc..

Un exemple d'un tel adhésif hot-melt est le M3062 d'ATO FINDLEY (melt index de 5,3g/10min, à 190°C sous 2,16kg).

L'adhésif comprendra notamment comme additifs des charges minérales, du type talc ou carbonate de calcium, ou des agents de processabilité (produits fluorés), introduits en des quantités relativement importantes (par rapport aux quantités normalement utilisées). Par exemple dans le cas des charges minérales, la teneur est par exemple entre 3 et 15 % en poids. Par exemple dans le cas des produits fluorés, la teneur est par exemple entre 0,2 et 3 % en poids.

L'additif est ajouté dans la plupart des cas sous forme de mélange-maître; dans ce cas, l'adhésif comprend en général de 5 à 25 % en poids de mélange maître contenant une charge ou des agents de processabilité.

A titre d'exemple d'adhésifs additivés utilisables dans l'invention, on peut mentionner les formulations suivantes:
a) 93% de M3062 et 7% de mélange maître Schulman RTL 1098 (composé de 70% de talc lamellaire et 30% de résine PE).
B) 80% de M3062 et 20% de mélange maître Schulman Polybatch AMF 702 (composé de 2% de Viton Free Flow 10 de Du Pont et de 98% de résine PE).

Ces additifs ne sont cependant pas utiles dans le cas où le procédé est le procédé de refermeture de bulle.

On recherchera aussi qu'un film multicouche, comprenant une couche en un adhésif tel que ci-dessus, puisse être thermoformé. On choisira alors de préférence des adhésifs de suffisamment forte viscosité pour éviter ou limiter au maximum le fluage (qui sinon conduirait à des déformations telles que inhomogénéité de l'épaisseur, formation de "vagues", etc.) ainsi que l'écoulement de l'adhésif d'entre les couches au cours du thermoformage et l'écoulement sur l'outillage de soudure.

Une viscosité élevée renforce aussi le phénomène de l'absence de déformation lors de l'application d'une barrette chauffante pour la soudure (en soudant côté opercule).

Des couches de liant peuvent être présentes, entre les couches d'adhésif et complexable et/ou entre les couches d'adhésif et soudante déchirable et/ou entre les couches d'adhésif et support. Si de telles couches de liant (L) sont utilisées (la structure devenant alors une structure à 5 couches, par exemple du type PE/L/HotMelt/L/PE), les couches complexable et/ou soudante déchirable (et/ou support) pourront alors avoir une composition plus "simple", sans ajout d'agent liant et/ou de PE métallocène (on préférera cependant même dans ce cas une couche soudante additivée). Le liant susceptible d'être utilisé pur dans les couches intermédiaires ou dilué dans les couches complexable et/ou soudante déchirable est un liant de coextrusion qui peut être choisi notamment parmi les polyoléfines ci-dessus qui sont modifiées. Comme polyoléfine de départ, on prendra par exemple des PE, des copolymères EVA à haute teneur en comonomère, etc. La modification se fait par greffage ou copolymérisation. Par exemple, la polyoléfine peut être maléisée (par exemple par de l'anhydride maléique). On peut aussi utiliser à titre de liant du PE métallocène pur.

Le liant est choisi de préférence de sorte que la force d'adhésion soit supérieure à la force de déchirure de la couche adhésive.

Lorsque des couches de liant sont utilisées, l'épaisseur de la structure (C) est alors comprise par exemple entre 40 et 200 µm, de préférence de 50 à 100 µm. L'épaisseur des couches de liant est comprise en général entre 2 et 10 µm, de préférence entre 3 et 5 µm.

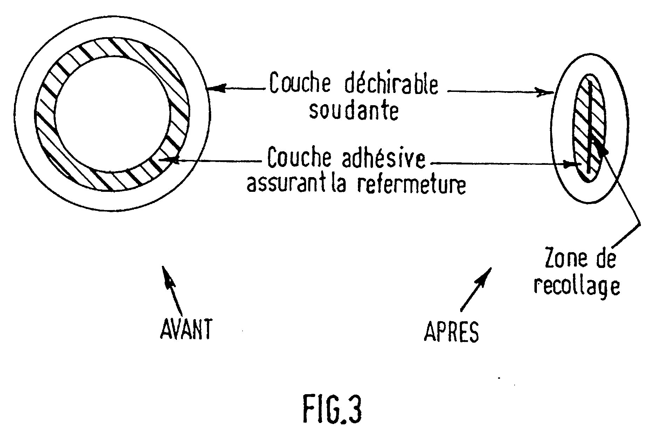

La structure (C) est préparée par le procédé d'extrusion-gaine dans lequel la structure (C) est obtenue par refermeture de la bulle de coextrusion. Ce mode de réalisation est décrit à la figure 3. On obtient alors une structure symétrique, les couches complexable et soudante déchirable ayant la même composition. De même, la couche adhésive (3) devient deux sous-couches (3a) et (3b) (respectivement, la couche (3') comprend deux sous-couches (3'a, 3'b)). Il y a alors une zone de faiblesse entre ces deux sous-couches; en effet, dans la zone de recollage, il y a collage de la résine adhésive sur elle-même alors que dans le cas d'une couche, celle-ci a été obtenue par fusion, ce qui forme une masse homogène plus résistante en raison de sa nature élastomérique. Avec une refermeture de bulle, il n'y a plus lieu de modifier la composition de l'adhésif par pression pour avoir "à coup sûr" une déchirure facile au sein de la couche d'adhésif.

Lors de l'extrusion de la gaine, de l'air est en général utilisé pour le gonflage de la bulle et son refroidissement. Cet air oxyde légèrement la surface de la couche d'adhésif (le hot melt) avant le recollage. La force nécessaire à la déchirure dans la couche adhésive est plus faible dans la zone de recollage des couches, du fait de la légère oxydation de celles-ci en surface, qu'à l'intérieur même de ces couches. On peut encore favoriser cette oxydation en injectant un agent oxydant au niveau de la bulle. On peut utiliser comme agent oxydant de l'ozone prélevée au niveau des équipements de traitement corona.

La refermeture de la bulle peut se faire par exemple à une température comprise entre 40 et 60°C et à une pression de 4 à 6 bars, de préférence environ 5 bars, au niveau des rouleaux du banc de tirage.

On peut ainsi jouer sur ces conditions opératoires. En effet, la force de recollage des couches est fonction de la pression exercée par les rouleaux du banc de tirage et de la température du film. Ces paramètres pourront être ajustés pour que la force de recollage soit inférieure à la force d'adhésion entre la couche adhésive et la couche complexable/soudante déchirable. De cette façon, la couche adhésive sera nécessairement présente sur les deux faces de l'emballage (après ouverture).

Cette technique de refermeture de bulle peut être aussi appliquée aux structures comprenant des couches de liant. L'appareil sera adapté en conséquence ; les compositions des couches seront aussi adaptées comme indiqué ci-dessus.

Il convient de noter que cette structure obtenue par refermeture de bulle peut s'appliquer à tout type d'emballage, que ce soit selon l'invention ou selon l'art antérieur. Ainsi, on peut utiliser la structure comme partie intégrante du contenant ou de l'opercule, ou comme film soudable sur lui-même dans le cas de la sacherie. Ainsi, cette structure obtenue par refermeture de bulle peut notamment s'appliquer aux emballages objets de la demande WO-A-97 19867 au nom de la demanderesse, ainsi qu'aux emballages objets de la demande FR-A-2669607, US-A-4673601 et EP-A-0661154.

Ainsi, l'invention trouvera à s'appliquer notamment (mais non limitativement) à une structre d'obturation munie d'une ouverture comprenant une feuille soudée siuvant le bord de l'ouverture, cette feuille étant constituée d'au moins trois couches à savoir une couche soudante appliquée et soudée suivant un cordon contre le bord de l'ouverture, une couche extérieure formant barrière, et une couche adhésive intermédiaire; la soudure du cordon de la couche soudante sur le bord de l'ouverture présentant une résistance à l'arrachement supérieure à la force d'adhésion entre la couche soudante et la couche adhésive de sorte qu'à la première opération de dégagement de l'ouverture le cordon soudé reste en place sur le bord de l'ouverture et se sépare du reste de la couche soudante et de la couche adhésive qui est ainsi découverte sur une zone et pemet par une nouvelle application contre le cordon de fermer à nouveau le contenant. Dans ce cas, la structure selon l'invention apporte la couche soudante et la couche d'adhésif, la couche complexable s'intégrant avec la couche extérieure formant barrière (qui comprend alors la couche complexable et une couche support).

La structre multicouche (C) obtenue par refermeture de bulle selon l'invention peut aussi s'appliquer aux doypacks (sachets qui tiennent debout, par exemple les écorecharges pour produits lessiviels) pour faciliter leur ouverture et leur refermeture faciles. Cela évite d'ajouter une bande ZIP® qui est coûteuse et difficile à déposer lors de sa fabrication (risque de fuite). Cette structure peut aussi servir à l'operculage des pôts et des barquettes injectées. Elle peut être utilisée comme agent soudant dans des structures destinées au conditionnement sur une machine horizontale du type FFH (par exemple pour pains longue conservation, plaquettes de fromage).

La structure (C) selon l'invention, peut être appliquée sur un film support. Ce film support confère les propriétés mécaniques et barrières aux gaz, à la vapeur d'eau et aux arômes.

A titre de film formant support, on peut utiliser des polyoléfines (PP-cast, PP orienté, PE), des polyamides (PA-cast, copolyamide, PA mono- ou bi-orientée), des styréniques (PS cristal, PS choc, PS orienté), du PVC, des papiers enduits ou non, des polyesters (PET-cast, PET orienté, PET cristallisable, PET G), de l'aluminium, des films enduits (avec PVDC, PVA, ...), des films métallisés sous vide (à base d'aluminium, d'alumine, de SiOₓ, ...).

La structure (C) est de préférence rapportée sur le support. Selon ce mode de réalisation, on prépare la structure (C), puis cette structure est appliquée selon différents procédés sur le support. On peut rapporter cette structure (C) par exemple par contre-collage, par extrusion-lamination, par calendrage à chaud ou par extrusion-couchage. selon le cas, la couche complexable reçoit une couche liante supplémentaire.

Dans les deux premiers procédés ci-dessus, une couche liante (7) est présente entre la structure selon l'invention et le support et assure la liaison.

Dans le cas du contre-collage, la structure (C) est préparée, puis rapportée sur le support, par exemple à froid (c'est-à-dire à une température inférieure à la température de fusion des films considérés). La couche liante peut être une colle, notamment une colle polyuréthanne, en particulier du type polyéther ou polyester, diluée ou non dans un solvant. Un traitement Corona de la couche complexable est préféré.

Dans le cas de l'extrusion-lamination, la structure (C) est préparée, puis est rapportée sur le support, (de préférence à froid), une couche de liant étant déposée entre la structure (C) et le support, de préférence par extrusion. Cette couche liante pourra être un liant de coextrusion, tel que décrit ci-dessus. Ce liant aura de préférence une température de fusion plus faible que celle de la couche support. L'extrusion-lamination est similaire au contre-collage, la différence étant la couche de liant au lieu de la couche de colle. Un traitement Corona de la couche complexable est possible mais il est optionnel.

Dans le cas du calendrage à chaud, la structure (C) est préparée, puis est directement appliquée sur le support, par l'intermédiaire de calendres, qui réchauffent les films préalablement préparés. Les couches en contact étant chaudes, il y a alors adhésion entre elles. Il n'y a pas dans ce cas nécessairement de couche liante supplémentaire (bien que cela soit possible), la couche complexable suffisant pour obtenir la liaison. Cette couche complexable peut par exemple être une couche EVA à forte teneur. Un traitement Corona n'est pas nécessaire, voire il est déconseillé.

Dans le cas de l'extrusion-couchage, la structure (C) coextrudée encore chaude (éventuellement avec une couche de liant supplémentaire) est appliquée encore chaude directement sur le support (par exemple un film de PET).

Il est préféré que l'ensemble formé par toutes les couches de la structure, de la couche liante et du support ne soient pas coextrudées ensemble, à la différence de l'art antérieur.

Une fois la structure (C) rapportée sur le support, cette association est de préférence thermoformée.

L'opercule comprend un film support (6) du type de celui décrit ci-dessus, et une couche soudante (5) du type de celle décrite ci-dessus. Les couches soudante déchirable (4) et soudante (5) seront de mêmes compositions ou de compositions différentes (mais compatibles entre elles). Ces couches (6) et (5) peuvent être liées entre elles, si nécessaire, par une couche de liant (8). Ce liant peut être du même type que celui décrit plus haut.

Les couches peuvent comprendre des sous-couches, le cas échéant. Ainsi, la couche support peut comprendre deux couches de PET, entre lesquelles se trouvent une couche d'encre d'impression et un couche de liant. De même, la couche complexable peut comprendre une couche par exemple en EVA à forte teneur et une couche en PE (côté adhésif); cette couche supplémentaire peut jouer le rôle de couche de renfort.
Les exemples suivants illustrent l'invention sans la limiter.

### EXEMPLE 1

### Conditionnement de fruits secs:

Les fruits secs sont conditionnés en vrac dans un emballage composé, dans sa partie inférieure, par un film contenant comprenant un film rigide thermoformé et, dans sa partie supérieure, par un opercule comprenant un film d'operculage souple imprimé. Le contenant, d'une épaisseur totale d'environ 510µm, se compose d'une structure (C) d'une épaisseur de 60µm, contre-collée à l'aide d'une colle polyuréthane sans solvant, d'épaisseur 1 µm, sur un film de PET amorphe rigide d'une épaisseur de 450 µm. La répartition en épaisseurs des couches de la structure (C), obtenue par refermeture de bulle, est la suivante :
15 µm de couche complexable traitée Corona à plus de 38 dynes ;
15 µm de couche d'adhésif par pression ;
15 µm de couche d'adhésif par pression ;
15 µm de couche soudante déchirable.

Cette structure est obtenue par refermeture de la bulle, avec un milieu oxydant.

En raison de la refermeture de bulle, les couches complexable et couche soudante déchirable ont la même composition :
Résine PE Métallocène (65%)
Résine PE MD (20%)
Mélange-Maître contenant la charge (10%)
Mélange-Maître additifs : glissant, anti-oxydant et processing aid (5%)

En raison de la refermeture de bulle, les couches d'adhésif ont la même composition :
M3062

Le complexage se fait sur une complexeuse sans solvant avec le dépôt de la colle sur la face complexable de la structure (C). Le thermoformage du film se fait à une profondeur de 25 mm pour permettre le positionnement des fruits secs. La température de thermoformage est comprise entre 100 et 130°C.

L'opercule ou film d'operculage est imprimé et présente une épaisseur totale de 99 µm. La structure se compose de :
12 µm de PET biorienté ;
2 µm de couche d'encres d'impression ;
1 µm de colle polyuréthanne sans solvant ;
23 µm de PET biorienté (pour donner une "main" au film) ;
1 µm de colle polyuréthanne sans solvant ;
60 µm de couche soudante.

Cette couche soudante a pour composition :
Résine PE BD (49%)
Résine PE Linéaire Octène (48%)
Additifs : glissant, anti-block et anti-oxydant (3%)

Les deux couches de 1 µm de colle polyuréthanne sans solvant assurent la liaison entre les couches et sont déposées à l'aide d'une complexeuse sans solvant.

La soudure des deux films composant l'emballage se fait à une température de 155°C, sous une pression de 6 bars durant 1,5 seconde, à l'aide de barrettes de soudure dont la forme peut être plate ou bombée.

La force nécessaire à l'ouverture de l'emballage se situe entre 900 et 1200 g/15 mm (en fonction de la pression exercée). La force d'ouverture reste supérieure à 400 g/15 mm après 10 ouvertures et refermetures.

## Revendications

1. Procédé de préparation d'une structure multicouche (C, C') symétrique, comprenant une couche centrale d'adhésif par pression (3, 3') et deux couches externes (2, 2'), (4, 4'), dont l'une est soudante déchirable (4, 4'), ladite couche centrale d'adhésif comprenant deux sous-couches (3a, 3b), (3'a, 3'b);
par refermeture de la bulle de coextrusion sur elle-même.

2. Procédé selon la revendication 1, dans lequel la refermeture se fait en milieu oxydant.

3. Procédé selon la revendication 1 ou 2, dans lequel dans la structure, la couche centrale d'adhésif par pression (3, 3') comprend un adhésif hot melt à base d'élastomère thermoplastique.

4. Procédé selon l'une des revendications 1 à 3, dans lequel dans la structure, les couches externes (2, 2'), (4, 4') sont en PE.

5. Procédé selon la revendication 4, dans lequel dans la structure, les couches externes comprennent du PE métallocène.

6. Emballage comprenant au moins un film déchirable (A, A'), ce film déchirable comprenant une structure obtenue par le procédé selon l'une quelconque des revendications 1 à 5.

7. Procédé de préparation d'un emballage selon la revendication 6, comprenant la soudure du film déchirable (A, A').

## Claims

1. A method for preparing a symmetrical multilayer structure (C, C'), comprising a central pressure-sensitive adhesive layer (3, 3') and two outer layers (2, 2'), (4, 4'), one of which is a tearable welding layer (4, 4'), said central adhesive layer comprising two sub-layers (3a, 3b), (3'a, 3'b),
by collapsing the co-extrusion bubble.

2. The method according to claim 1, in which collapsing of the co-extrusion bubble is done in an oxidizing medium.

3. The method according to claim 1 or 2, in which, in the structure, the central pressure-sensitive adhesive layer (3, 3') comprises a thermoplastic elastomer-based hot melt adhesive.

4. The method according to one of claims 1-3, in which, in the structure, the outer layers (2, 2'), (4, 4') are in PE.

5. The method according to claim 4, in which, in the structure, the outer layers comprise PE metallocene.

6. A packaging comprising at least one tearable film (A, A'), said tearable film comprising a structure obtained by the process according to any one of claims 1-5.

7. The method for preparing a packaging according to claim 6, comprising welding of said tearable film (A, A').

## Patentansprüche

1. Verfahren zur Herstellung einer mehrschichtigen symmetrischen Struktur (C, C') durch Wiederverschließung der Koextrusionsblase auf ihr selbst, wobei die Struktur eine zentralen Haftkleberschicht (3,3') sowie zwei äußere Schichten (2,2'), (4,4') umfasst, von denen eine zerreißbar und verschweißbar ist (4,4') und wobei die genannte zentrale Klebeschicht zwei Unterschichten umfasst (3a, 3b), (3a',3b').

2. Verfahren gemäß Anspruch 1, bei dem die Wiederverschließung (der Extrusionsblase) in oxidierender Umgebung erfolgt.

3. Verfahren gemäß Anspruch 1 oder 2, bei dem in der Struktur die zentrale Haftkleberschicht (3,3') einen Hotmeltkleber auf Basis eines thermoplastischen Elastomers enthält.

4. Verfahren gemäß einem der Ansprüche 1 bis 3, bei dem in der Struktur die äußeren Schichten (2,2'),(4,4') aus PE bestehen.

5. Verfahren gemäß Anspruch 4, bei dem in der Struktur die äußeren Schichten Metallocen-PE enthalten.

6. Verpackung, die mindestens eine zerreißbare Folie (A, A') enthält, wobei diese Folie eine Struktur enthält, die durch das Verfahren nach einem der Ansprüche 1 bis 5 hergestellt wird.

7. Verfahren zur Herstellung einer Verpackung gemäß Anspruch 6, welches die Verschweißung der zerreißbaren Folie (A, A') umfasst.
